# EUROPEAN PATENT SPECIFICATION

(11) **EP 2 461 082 B1**
(45) Date of publication and mention of the grant of the patent: **28.06.2017**
(21) Application number: 11191462.8
(22) Date of filing: 01.12.2011
(51) Int. Cl.: F21Y 115/10, F21K 9/00, F21V 23/00, F21K 9/232, F21K 9/60, F21Y 101/00, G02B 19/00, F21V 13/02, F21V 5/00, F21V 5/04

(54) **Omnidirectional LED lamp**
Omnidirektionale LED-Lampe
Lampe à DEL omnidirectionnelle

(30) Priority: 02.12.2010 US 958560; 21.12.2010 TW 099144881
(43) Date of publication of application: 06.06.2012
(73) Proprietor: Aether Systems Inc., Taipei City 11492 (TW)
(72) Inventor: Chou, Yen-Chun, 11492 Taipei City (TW)
(74) Representative: 2K Patentanwälte Blasberg Kewitz & Reichel

(56) References cited:
- WO-A1-2008/017718
- WO-A2-2005/050710
- DE-U1-202010 005 865
- US-A1- 2003 072 150
- US-B1- 6 536 921

## Description

### FIELD OF THE INVENTION

This invention relates to a light emitted diode (LED) lamp, especially an omnidirectional LED lamp which is configured with a complex lens to modify light beams from the light emitted diode to emit light beams in full direction like a traditional light bulb.

### BACKGROUND

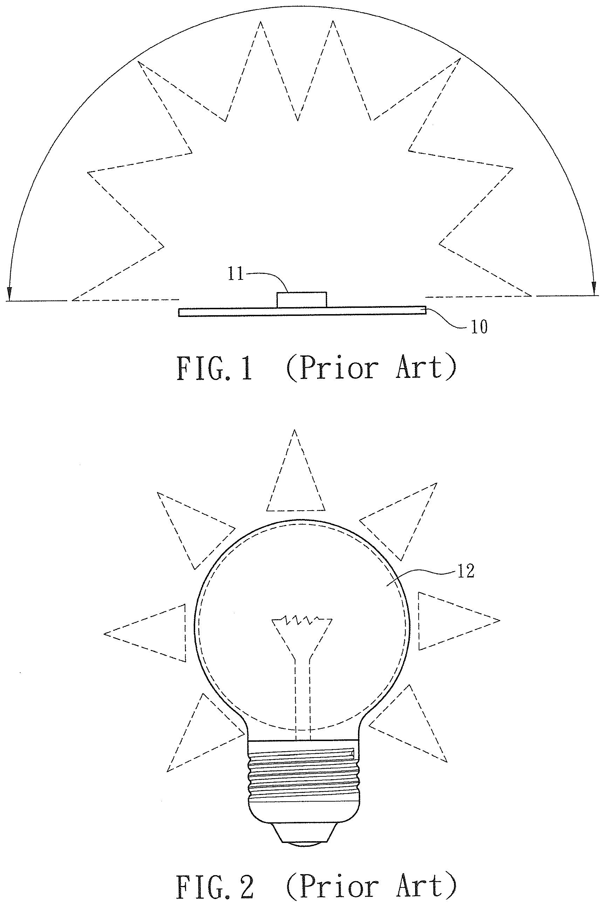

Fig. 1 is a conventional LED lamp. With reference to FIG. 1, an LED chip 11 is mounted on a circuit board 10. When the LED chip 11 is energized, the bulb sheds light beams hemispherically or, nearly 180 degree in a section view. This hemispheric illumination lamp of Fig. 1 is not good to be used as a light source for a decorative lamp such as a ceiling lamp which is covered by a lampshade. A lampshade is a fixture that covers a light bulb on a lamp to diffuse the light beams it emits. A decorative lamp is usually configured with a lampshade that could be transparent or semi-transparent one and with a special outline design. In order to display the beauty of the lampshade, light beams should have to shed on most of the lampshade, an omnidirectional light source such as a traditional tungsten lamp is chosen to be used as the light source. The LED lamp as shown in Fig. 1 is not a good candidate to be used as the light source.

Fig. 2 is a conventional tungsten lamp. The tungsten lamp 12 has a full directional illumination capability, nearly 360 degree illumination in section view, which is a right choice to be used as a light source for a decorative lamp mentioned above. LED technology has been well developed in recent years. Data shows that LED lamps save 80% energy than incandescent lamps, 50% energy saving than fluorescent lamps. LED lamps have the advantages on energy saving and environmental protection, and have become a major trend of development in the lighting field. It is long desired if an omnidirectional LED lamp can be figured out to replace traditional incandescent lamps such as tungsten lamps with low energy efficient.

WO 2008/017718 A discloses that a first toroidal ray guide defines an axis of revolution and has a toroidal entrance pupil adapted to image light incident on the entrance pupil at an angle to the axis of revolution between 40 and 140 degrees, and it also has a first imaging surface opposite the entrance pupil, and a second toroidal ray guide also defines the same axis of revolution and has a second imaging surface adjacent to the first imaging surface.

US 2003/072150 A discloses that a portable luminaire includes an optical module, a power source and a housing. The optical module has at least one light emitting diode (LED) that emits light with a wide divergence, a non-imaging optical element and a transparent window. The non-imaging optical element (NIO) has a refractive member located around a LED optical axis and a total internal reflection member located around the refractive member. The refractive member and the total internal reflection member are integrated in a single transparent element having a mutual focal point. The NIO element collects a significant amount of light emitted by the LED with wide divergence located at the focal point to compress the collected light with high efficiency into a required pattern with a generally different angular distribution in a horizontal plane and a vertical plane, and to direct the compressed light outside of the luminaire.

WO 2005/050710 A discloses that an optical device for coupling the luminous output of a light-emitting diode (LED) to a predominantly spherical pattern comprises a transfer section that receives the LED's light within it and an ejector positioned adjacent the transfer section to receive light from the transfer section and spread the light generally spherically. A base of the transfer section is optically aligned and/or coupled to the LED so that the LED's light enters the transfer section. The transfer section comprises a compound elliptic concentrator operating via total internal reflection.

### BRIEF DESCRIPTION OF THE DRAWINGS

Fig. 1 is a schematic view of a conventional LED lamp.
Fig. 2 is a schematic view of a conventional tungsten lamp.
Fig. 3 is a schematic view of a first fan-out area of light beams from a top center lens of a complex lens of an LED lamp according to the invention.
Fig. 4 is a schematic view of a second fan-out area of light beams from a wing lens of a complex lens of an LED lamp according to the invention.
Fig. 5 is a schematic view of a third fan-out area of light beams from a tube lens of a complex lens of an LED lamp according to the invention.
Fig. 6A is a top view of the complex lens of an LED lamp according to the invention.
Fig. 6B is a section view of the complex lens of an LED lamp according to the invention.
Fig. 6C is a section view of the complex lens of an LED lamp according to the invention.
Figs. 7A to 7E are schematic views of several examples of complex lens of an LED lamp according to the invention.
Fig. 8 is a section view of a first embodiment of an LED lamp according to the invention.
Fig. 9A is a section view of a second embodiment of an LED lamp according to the invention.
Fig. 9B is an enlarge view of an LED chip used in Fig. 9A according to the invention.
Fig. 9C is a section view of an LED lamp is used to replace the chip of Fig. 9B according to the invention.
Fig. 10 is a section view of a third embodiment of an LED lamp according to the invention.
FIG. 11 is a section view of a fourth embodiment of an LED lamp according to the invention.
FIG. 12 is a section view of a fifth embodiment of an LED lamp according to the invention.

### DETAILED DESCRIPTION OF EMBODIMENTS

An LED lamp is designed to include a complex lens and an LED light source. The complex lens is composed of three lens components: a top center lens, refracts a first group of light beams from the LED for a first fan-out area to illuminate top spaces of the complex lens; a wing lens, designed to have a property of total internal reflection capability and configured in the peripheral of the top center lens, reflects a second group of light beams from the LED for a second fan-out area to cover side bottom spaces of the complex lens; and a tube lens, configured on bottom of said wing lens, refracts a third group of light beams from the LED for a third fan-out area to cover side top spaces of the complex lens.

The first fan-out area, second fan-out area, and third fan-out area creates an omnidirectional illumination LED lamp which gives nearly 360 degree illumination in section view.

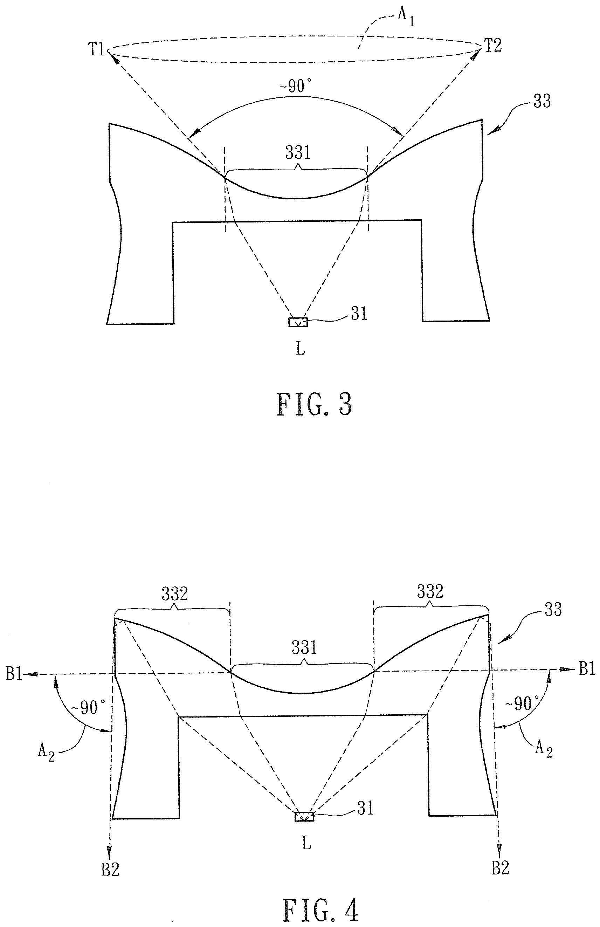

Fig. 3 is a schematic view of a first fan-out area A₁ of light beams from a top center lens 331 of a complex lens 33 according to the invention.

Referring to fig. 3, a complex lens 33 has a top center lens 331, the top center lens 331 is a concave lens which modifies light beams from an underside LED 31 to fan out and sheds lights on top of the complex lens 33 to cover a conical region as shown between the lines LT₁ and LT₂ in section view. The span angle of the conical region is nearly 90 degree in section view. The first fan-out area A₁ covers 0∼45 degree and 315∼360 degree in section view.

Fig. 4 is a schematic view of a second fan-out area A₂ of light beams from a wing lens 332 of a complex lens 33 according to the invention.

Referring to fig. 4, a complex lens 33 has a wing lens 332 extending from the top center lens 331, the wing lens 332 is a concave lens which surrounds and connects peripherally to the top center lens 331. It is noted that reflectivity of the wing lens 332 is between 50% and 100%, and in this case, the wing lens 332 is a total internal reflection (TIR) lens which modifies light beams from an underside LED 31 to fan out and sheds lights on side bottom of the complex lens 33 to cover a conical region as shown between the lines LB₁ and LB₂ in section view. The span angle of the conical region is nearly 90 degree in section view. The second fan-out area A₂ covers 90-180 degree and 180-270 degree in section view.

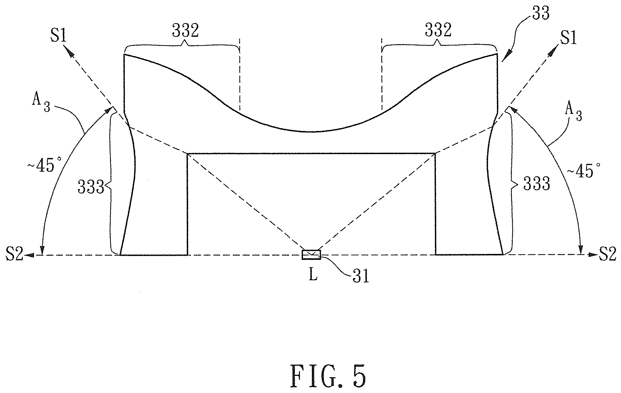

Fig. 5 is a schematic view of a third fan-out area A₃ of light beams from a tube lens 333 of a complex lens 33 according to the invention.

Referring to fig. 5, a complex lens 33 has a tube lens 333 connected to the bottom of the wing lens 332. The tube lens 333 modifies light beams from an underside LED 31 to fan out and sheds lights on side top of the complex lens 33 to cover a conical region as shown between the lines LS₁ and LS₂ in section view. The span angle of the conical region is nearly 45 degree in section view. The third fan-out area A₃ covers 45-90 degree and 270-315 degree in section view.

The first fan-out area A₁ covers 0-45 degree and 315-360 degree, the second fan-out area A₂ covers 90∼180 degree and 180-270 degree, and the third fan-out area A₃ covers 45-90 degree and 270∼315 degree. The combination of the first fan-out area A₁, the second fan-out area A₂, and the third fan-out area A₃ creates an omnidirectional illumination or 360 degree illumination in section view.

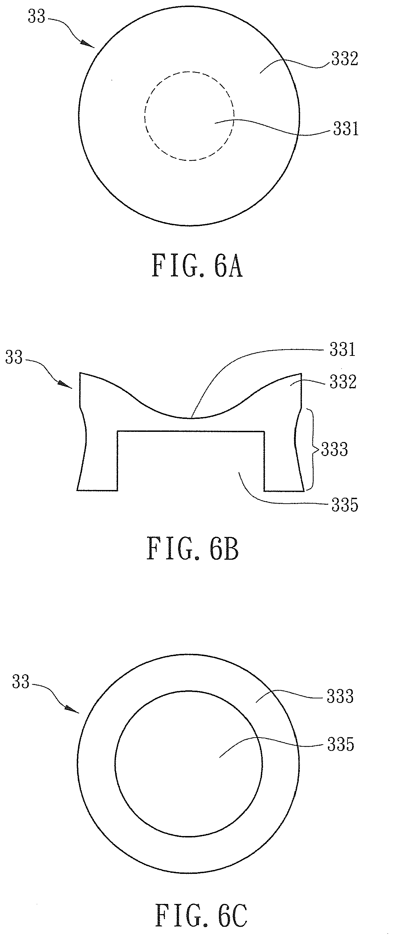

Fig. 6A is a top view of the complex lens 33 according to the invention.

Fig. 6A shows a top center lens 331 and a peripheral wing lens 332 configured on top portion of the complex lens 33.

Fig. 6B is a section view of the complex lens 33 according to the invention.

Fig. 6B shows an M shaped structure lens which includes a top center lens 331, a peripheral wing lens 332 surrounding the top center lens 331, and a tube lens 333 under the wing lens 332. In addition, a center recess 335 is under the top center lens 331 and is surrounded by the tube lens 333.

Fig. 6C is a section view of the complex lens 33 according to the invention.

As shown in fig. 6C, a tube lens 333 configured under the wing lens 332. A bottom center recess 335 is configured under the top center lens 331.

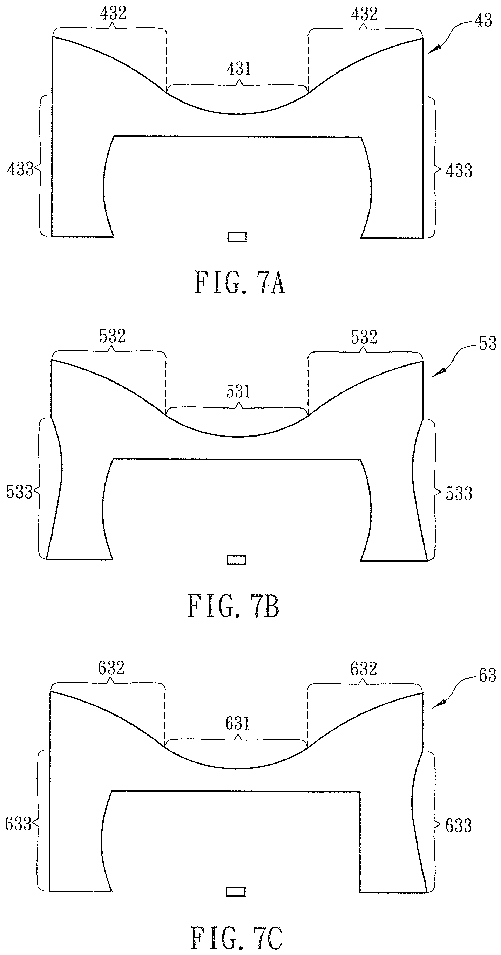

Referring to FIG. 7A to FIG. 7E, several examples of complex lens are shown. As shown in FIG. 7A, a complex lens 43 has a top center lens 431, a wing lens 432 and a tube lens 433. The wing lens 432 surrounds and connects peripherally to the top center lens 431. The tube lens 433 is connected to the bottom of the wing lens 432, and the tube lens 433 of a complex lens 43 is a plano-concave lens.

With reference to FIG. 7B, in another preferred embodiment of the present invention, a complex lens 53 has a top center lens 531, a wing lens 532 and a tube lens 533. The difference in structure between the complex lens 53 and the complex lens 33 is the tube lens 533 which is a biconcave lens.

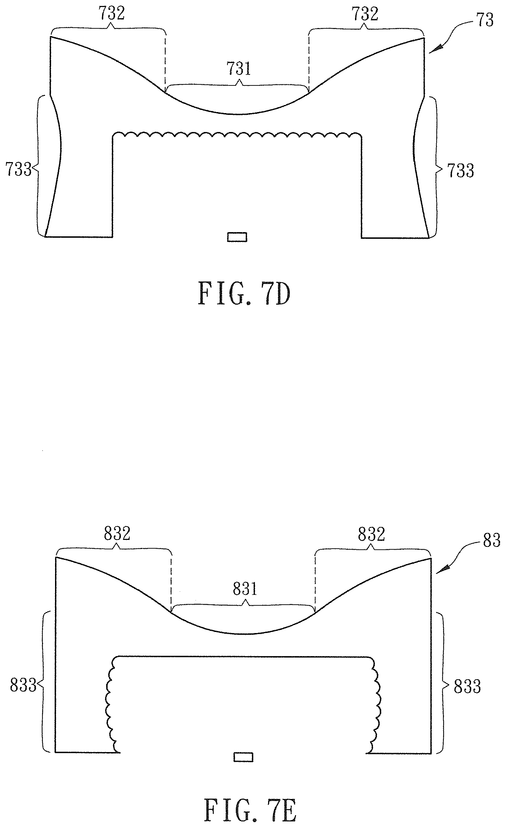

Referring to FIG. 7C, a tube lens 633 of a complex lens 63 has asymmetrical concave lens. As shown in FIG. 7D, a complex lens 73 has a top center lens 731, a wing lens 732 and a tube lens 733. The wing lens 732 surrounds and connects peripherally to the top center lens 731. The tube lens 733 is connected to the bottom of the wing lens 732. In this example, an illuminated face of the top center lens 731 and an illuminated face of the wing lens 732 have a plurality of microstructures, and the cross-section shape of the microstructure is corrugated shape, arc, triangle, polygon, or irregular shape.

Referring to FIG. 7E, a tube lens 833 of a complex lens 83 has a plurality of microstructures which are formed on an illuminated face of the tube lens 833. The cross-section shape of the microstructure is corrugated shape, arc, triangle, polygon, or irregular shape.

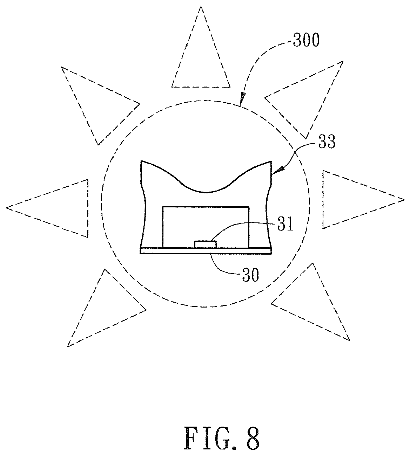

Fig. 8 shows a first embodiment of an LED lamp 300 according to the invention.

Fig. 8 is a section view of a first embodiment of an LED lamp 300 according to the invention. An LED lamp 300 includes a base plate 30, an LED 31 and a complex lens 33. In this case, the base plate 30 is a circuit board. The LED 31 is mounted on the base plate 30. The complex lens 33 is fixed on the base plate 30 with a bottom center recess 335 housing the LED 31 underside. Due to the full directional modification capability of the complex lens 33, the LED lamp 300 sheds lights in full direction, or nearly 360 degree in section view.

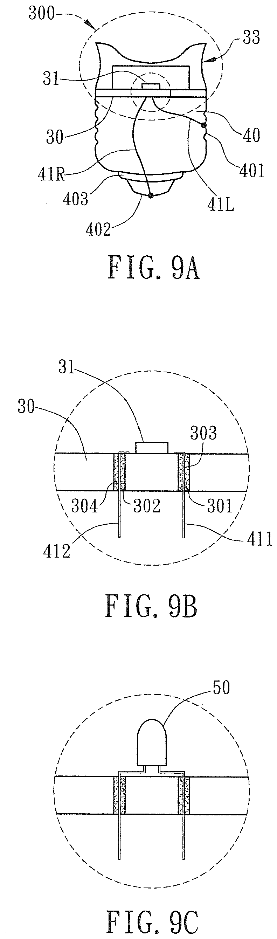

Fig. 9A shows a second embodiment of an LED lamp 400 according to the invention.

Fig. 9A is a section view of a second embodiment of an LED lamp 400 according to the invention. Referring to Fig. 9A, the LED lamp 400 further comprises a socket 40. The socket 40 is configured under the circuit board 30. The socket 40 has a wall metal 401 and a bottom metal 402. An insulation layer 403 is configured for electrical insulation in between the wall metal 401 and the bottom metal 402. The LED 31 has a first electrode (not shown in the figure) electrically coupling to the wall metal 401 through wire 41L. The LED 31 has a second electrode (not shown in the figure) electrically coupling to the bottom metal 402 through wire 41R. The lamp of Fig. 9A sheds lights in full direction when the LED 31 is energized by screwing the socket 40 onto a traditional electrical outlet.

Fig. 9B shows an LED chip used in Fig. 9A according to the invention, and fig. 9B is an enlarge view to show the configuration of the chip 31 and the circuit board 30 of Fig. 9A. The chip 31 is mounted on the circuit board 30. The circuit board 30 has a first through hole 301 and a second through hole 302 for metal leads 411, 412 to pass through, respectively. Each of the metal leads 411, 412 electrically couples to a first end of one of the two electrodes of the LED 31. A second end of each of the metal leads 411, 412 electrically couples to the wall metal 401 or the bottom metal 402 respectively. A first insulation material 303 and a second insulation material 304 are optionally filled in the first through hole 301 and the second through hole 302 for fixing the metal leads 411, 412, respectively.

Fig. 9C shows an LED package 50 is used to replace the LED chip 31 of Fig. 9B according to the invention. As shown in fig. 9C, the LED package 50 can be used to replace the LED chip 31 of Fig. 9B.

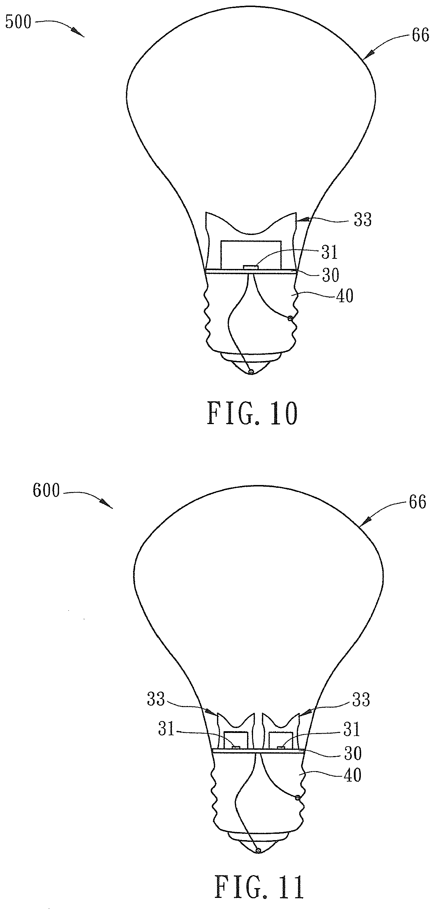

Fig. 10 is a third embodiment of an LED lamp 500 according to the invention. As shown in fig. 10, the LED lamp 500 further comprises a bulb 66. The bulb 66 is mounted on top of the socket 40. The base plate 30, the LED 31 and the complex lens 33 are enclosed inside the bulb 66 to make the LED lamp 500 having a contour like a traditional lamp. In actual application, the bulb 66 may be a glass bulb or a plastic bulb, and it is not limited thereto.

Fig. 11 is a fourth embodiment of an LED lamp 600 according to the invention. With reference to Fig. 11, the LED lamp 600 has a base plate 30, two light emitted diodes 31, two complex lenses 33 and a socket 40. The complex lenses 33 are disposed on the base plate 30, and each light emitted diode 31 is disposed under one of the complex lenses 33, respectively. The socket 40 is configured under the base plate 30.

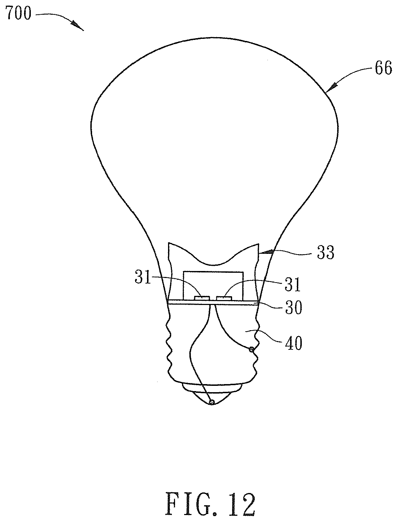

Fig. 12 is a fifth embodiment of an LED lamp 700 according to the invention. As shown in Fig. 12, the LED lamp 700 has a base plate 30, two light emitted diodes 31, a complex lens 33 and a socket 40. The complex lens 33 is disposed on the base plate 30, and the light emitted diodes 31 are disposed under the complex lens 33. The socket 40 is configured under the base plate 30.

In summary an LED lamp 300 is designed with a complex lens 33 covering a light source of light emitted diode chip or a light emitted diode package. The complex lens composes of a top center lens 331, a wing lens 332, and a tube lens 333. The top center lens 331 modifies the light beams to shed above, the wing lens 332 surrounding and connecting with the top center lens to modify the light beams to shed below, and the tube lens 333 under and connecting to the wing lens to modify the light beams to shed side top. The complex lens modifies light beams from a light source to shed full directions.

## Claims

1. An LED lamp, comprising:
at least one light emitted diode (31); and
at least one complex lens (33), further comprising:
a top center lens (331), refracting a first group of light beams from said LED (31) for a first fan-out area (A₁) to illuminate top spaces of said complex lens;
a wing lens (332), surrounding and connecting said top center lens (331), reflecting a second group of light beams from said LED (31) for a second fan-out area (A₂) to cover side bottom spaces of said complex lens; and
a tube lens (333), on bottom of said wing lens (332), refracting a third group of light beams from said LED (31) for a third fan-out area (A₃) to cover side top spaces of said complex lens,
**characterised in that** said top center lens (331) is a concave lens, said wing lens (332) is a total internal reflection lens, and said tube lens (333) is a concave lens.

2. The LED lamp according to claim 1, further comprising a base plate (30) for carrying said light emitted diode (31).

3. The LED lamp according to claim 2, wherein said base plate (30) further comprising:
a first through hole (301) and a second through hole (302);
a first lead (411), passing through said first through hole (301), electrically coupling to a first electrode of said light emitted diode (31); and
a second lead (412), passing through said second through hole (302), electrically coupling to a second electrode of said light emitted diode (31).

4. The LED lamp according to claim 3, further comprising:
a first insulation material (303), filled in said first through hole (301) for fixing said first lead (411); and
a second insulation material (304), filled in said second through hole (302) for fixing said second lead (412).

5. The LED lamp according to one of claims 2-4, further comprising:
a socket (40), configured under said base plate (30), further comprising:
a bottom metal (402), electrically coupling to a first electrode of said LED (31);
a wall metal (401), electrically coupling to a second electrode of said LED (31); and
an insulation layer (403), configured in between said bottom metal (402) and said wall metal (401).

6. The LED lamp according to claim 5, further comprising a bulb (66) configured on top of said socket (40).

7. The LED lamp according to claim 6, wherein said bulb (66) is a glass bulb or a plastic bulb.

8. The LED lamp according to one of claims 1-7, wherein said light emitted diode (31) is an LED chip.

9. The LED lamp according to one of claims 1-8, wherein said LED is an LED package.

## Patentansprüche

1. LED-Lampe, umfassend:
mindestens eine lichtemittierte Diode (31); und
mindestens eine komplexe Linse (33), die ferner aufweist:
eine obere Mittellinse (331), die eine erste Gruppe von Lichtstrahlen von der LED (31) für einen ersten Ausfächerungs-Bereich (A1) bricht, um obere Bereiche der komplexen Linse zu beleuchten;
eine Seitenlinse (332), die die obere Mittellinse (331) umgibt und verbindet, die eine zweite Gruppe von Lichtstrahlen von der LED (31) für einen zweiten Ausfächerungs-Bereich (A2) reflektiert, um seitliche untere Bereiche der komplexen Linse zu erfassen; und
eine Röhrenlinse (333) auf der Unterseite der Seitenlinse (332), die eine dritte Gruppe von Lichtstrahlen von der LED (31) für einen dritten Ausfächerungs-Bereich (A3) bricht, um die seitlichen oberen Bereiche der komplexen Linse zu erfassen;
**dadurch gekennzeichnet, dass** die obere Mittellinse (331) eine konkave Linse ist, dass die Flügellinse (332) eine Total-Intern-Reflexionslinse ist und die Röhrenlinse (333) eine konkave Linse ist.

2. LED-Lampe nach Anspruch 1, ferner aufweisend eine Basisplatte (30) zum Tragen der lichtemittierten Diode (31).

3. LED-Lampe nach Anspruch 2, wobei die Basisplatte (30) ferner aufweist:
ein erstes Durchgangsloch (301) und ein zweites Durchgangsloch (302);
eine erste Leitung (411), die durch das erste Durchgangsloch (301) hindurchgeht und elektrisch mit einer ersten Elektrode der lichtemittierten Diode (31) verbunden ist; und
eine zweite Leitung (412), die durch das zweite Durchgangsloch (302) hindurchgeht und elektrisch mit einer zweiten Elektrode der lichtemittierten Diode (31) verbunden ist.

4. LED-Lampe nach Anspruch 3, ferner aufweisend:
ein erstes Isoliermaterial (303), das in das erste Durchgangsloch (301) gefüllt ist, um die erste Leitung (411) zu fixieren; und
ein zweites Isoliermaterial (304), das in das zweite Durchgangsloch (302) gefüllt ist, um die zweite Leitung (412) zu fixieren.

5. LED-Lampe nach einem der Ansprüche 2 bis 4, ferner aufweisend:
eine Buchse (40), die unter der Basisplatte (30) ausgebildet ist, ferner aufweisend:
ein Bodenmetall (402), das elektrisch mit einer ersten Elektrode der LED (31) verbunden ist;
ein Wandungsmetall (401), das elektrisch mit einer zweiten Elektrode der LED (31) verbunden ist; und
eine Isolationsschicht (403), die zwischen dem Bodenmetall (402) und dem Wandmetall (401) ausgebildet ist.

6. LED-Lampe nach Anspruch 5, ferner aufweisend eine Glühbirnenkörper (66) die eine auf der Oberseite der Buchse (40) ausgebildet ist.

7. LED-Lampe nach Anspruch 6, wobei der Glühbirnenkörper (66) ein Glaskolbenkörper oder ein Kunststoffbirnenkörper ist.

8. LED-Lampe nach einem der Ansprüche 1 bis 7, wobei die lichtemittierte Diode (31) ein LED-Chip ist.

9. LED-Lampe nach einem der Ansprüche 1 bis 8, wobei die LED eine LED-Packungseinheit ist.

## Revendications

1. Une lampe à DEL, comprenant:
au moins une diode électroluminescente (31); et
au moins une lentille complexe (33), comprenant en outre:
une lentille centrale supérieure (331), réfractant un premier groupe de faisceaux lumineux provenant de ladite DEL (31) pour une première zone d'émission (A1) illuminant les espaces supérieurs de ladite lentille complexe;
une lentille latérale (332), entourant et reliant ladite lentille centrale supérieure (331), reflétant un deuxième groupe de faisceaux lumineux provenant de ladite DEL (31) pour une seconde zone d'émission (A2) destinée à couvrir les espaces inférieurs latéraux de ladite lentille complexe ; et
une lentille tubulaire (333), au fond de ladite lentille latérale (332), réfractant un troisième groupe de faisceaux lumineux provenant de ladite DEL (31) pour une troisième zone d'émission (A3) destiné à recouvrir les espaces supérieurs latéraux de ladite lentille complexe,
**caractérisée en ce que** ladite lentille centrale supérieure (331) est une lentille concave, ladite lentille latérale (331) est une lentille de réflexion interne totale, et ladite lentille tubulaire (333) est une lentille concave.

2. La lampe à DEL selon la revendication 1, comprenant en outre une plaque de base (30) pour porter ladite diode électroluminescente (31).

3. La lampe LED selon la revendication 2, dans laquelle ladite plaque de base (30) comprend en outre:
un premier trou traversant (301) et un second trou traversant (302);
un premier conducteur (411) traversant ledit premier trou traversant (301), électriquement couplée à une première électrode de ladite diode électroluminescente (31); et
un second conducteur (412), traversant ledit second trou traversant (302), électriquement couplée à une seconde électrode de ladite diode électroluminescente (31).

4. La lampe à DEL selon la revendication 3, comprenant en outre:
un premier matériau isolant (303), remplissant ledit premier trou traversant (301) pour fixer ledit premier conducteur (411); et
un second matériau isolant (304), remplissant ledit second trou traversant (302) pour fixer ledit second conducteur (412).

5. La lampe à DEL selon l'une des revendications 2 à 4, comprenant en outre:
une douille (40), configurée sous ladite plaque de base (30), comprenant en outre: un métal inférieur (402) électriquement couplée à une première électrode de ladite LED (31);
un métal de paroi (401), électriquement couplé à une seconde électrode de ladite LED (31); et
une couche isolante (403), configurée entre ledit métal inférieur (402) et ledit métal de paroi (401).

6. La lampe à DEL selon la revendication 5, comprenant en outre une ampoule (66) configurée sur le dessus de ladite douille (40).

7. La lampe à DEL selon la revendication 6, dans laquelle ladite ampoule (66) est une ampoule en verre ou une ampoule en plastique.

8. La lampe à DEL selon l'une des revendications 1-7, dans laquelle ladite diode électroluminescente (31) est une puce LED.

9. La lampe à DEL selon l'une des revendications 1-8, dans laquelle ladite DEL est un assemblage à DEL.
